# EUROPÄISCHE PATENTANMELDUNG

(11) **EP 3 136 106 A1**
(43) Veröffentlichungstag der Anmeldung: **01.03.2017**
(21) Anmeldenummer: 15182846.4
(22) Anmeldetag: 28.08.2015
(51) Int. Cl.: G01N 35/00, G01N 35/10

(54) **PHOTOMETRISCHE ANALYSE EINER PROBENFLÜSSIGKEIT**

(71) Anmelder: Siemens Healthcare Diagnostics Products GmbH, 35041 Marburg (DE)
(72) Erfinder: Meller, Paul, 61273 WEHRHEIM (DE)

(57) **Zusammenfassung**

Die vorliegende Erfindung liegt auf dem Gebiet der automatischen Analysegeräte und betrifft ein Verfahren zur photometrischen Analyse einer Probenflüssigkeit (6) in einem Analyseröhrchen (4), wobei die Aufnahme der Probenflüssigkeit (6) in das Analyseröhrchen (4) ausschließlich über Kapillaraszension erfolgt.

## Beschreibung

Die vorliegende Erfindung liegt auf dem Gebiet der automatischen Analysegeräte und betrifft ein Verfahren zur photometrischen Analyse einer Probenflüssigkeit in einem Analyseröhrchen, wobei die Aufnahme der Probenflüssigkeit in das Analyseröhrchen ausschließlich über Kapillaraszension erfolgt.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weiterleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Ein Analysegerät weist mindestens eine Messeinheit zur optischen Analyse der Testansätze auf. Ein Testansatz ist ein Gemisch aus der zu analysierenden Primärprobe und einem oder mehreren Nachweisreagenzien, die für den Nachweis des zu bestimmenden Analyten benötigt werden. Die Testansätze werden üblicherweise bereit gestellt, indem mittels einer oder mehrerer Pipettiervorrichtungen ein Volumen einer Primärprobe und ein Volumen einer Reagenzflüssigkeit in eine Messzelle abgegeben wird. Es sind unterschiedliche Messzellentypen bekannt, wie beispielsweise röhrchenförmige Einzelküvetten mit einem Durchmesser von ca. 0,5 bis 1 cm und einer Länge von ca. 2 bis 3 cm, Mikrotitrationsplatten mit einer Vielzahl von Näpfchen, in denen eine Vielzahl von Testansätzen bereit gestellt werden, oder auch sogenannte Multiküvettenrotoren mit einer Vielzahl von separierten Kompartimenten zur Bereitstellung mehrerer Testansätze(z.B. US-A-5186896).

Einige moderne Analysegeräte, insbesondere solche auf dem Gebiet der in vitro-Diagnostik humaner oder tierischer Körperflüssigkeitsproben, weisen neben der (analytischen) Messeinheit zur optischen Analyse der Testansätze zusätzlich eine zweite (präanalytische) Messeinheit zur optischen Analyse der Primärproben auf. Die präanalytische Messeinheit hat den Zweck, die Körperflüssigkeitsproben dahingehend zu analysieren, ob die Extinktion der Körperflüssigkeitsprobe als solcher bei bestimmten Wellenlängen Grenzwerte übersteigt und damit das Risiko einer Fehlbestimmung des Analyten besteht. Körperflüssigkeitsproben können in Einzelfällen abnormal hohe Konzentrationen einer oder mehrerer intrinsischer, also körpereigener Substanzen enthalten, die sich bei Überschreitung einer tolerablen Konzentration in photometrischen Detektionsverfahren als störend erweisen und sich zu einem systematischen Fehler auswirken können. Probleme bereiten bekanntermaßen hämolytische, ikterische und/oder lipämische Serum- oder Plasmaproben, die über abnormal hohe Hämoglobin-, Bilirubin- und/oder Lipid-Konzentrationen verfügen. Abnormal hohe Konzentrationen dieser interferierenden Substanzen können durch einen pathologischen Zustand des Patienten oder aber durch eine unsachgemäße Probengewinnung oder -lagerung verursacht werden. Werden Testansätze solcher Primärproben einem photometrischen Verfahren unterworfen, das der Bestimmung eines analytischen, diagnostisch relevanten Parameters dient, besteht die Gefahr einer Fehlbestimmung, die gegebenenfalls eine Fehldiagnose und schlimmstenfalls eine Fehlbehandlung des Patienten zur Folge haben kann. Die präanalytische Identifikation hämolytischer, ikterischer sowie lipämischer Proben ist also zur Vermeidung von fehlerhaften Analyseergebnissen von besonderer Wichtigkeit. Nichtsdestotrotz soll die präanalytische Analyse keine wesentliche Verzögerung der Gesamtbearbeitungszeit einer Probe verursachen und möglichst wenig Probenmaterial benötigen.

Es sind Analysegeräte bekannt, in denen die präanalytische optische Analyse der Primärproben in der Pipettiervorrichtung durchgeführt wird. Dazu wird ein Volumen der Primärprobe mit Hilfe einer Pipettiernadel aus dem Primärprobengefäß angesaugt, und mit einer an der Pipettiernadel angebrachten photometrischen Messeinheit wird die Extinktion der Primärprobe bestimmt. Daran ist nachteilig, dass die Anbringung einer photometrischen Einheit an der beweglichen Pipettiervorrichtung technisch kompliziert und aufwändig ist.

Ein anderes Analysegerät (US-B2-7760340) sieht eine drehbare, ringförmige Aufnahmevorrichtung für eine Vielzahl von Einzelküvetten vor, an der eine erste photometrische Messeinheit für die präanalytische optische Analyse der Primärprobenflüssigkeiten vorgesehen ist. Die zweite photometrische Messeinheit für die analytische optische Analyse der Testansätze ist an einer anderen Stelle in dem Analysegerät vorgesehen, zu der die Einzelküvetten dann transportiert werden, wenn durch Zugabe von Reagenzflüssigkeit zu den Primärprobenflüssigkeiten in den Einzelküvetten Testansätze hergestellt wurden.

Der vorliegenden Erfindung liegt die Aufgabe zugrunde, Verfahren und Mittel bereit zu stellen, die die photometrische Analyse einer Probenflüssigkeit in einem automatischen Analysegerät ermöglichen und die sich insbesondere auch zur präanalytischen optischen Analyse von Primärprobenflüssigkeiten eignen.

Die Aufgabe wird dadurch gelöst, dass Analyseröhrchen zur Aufnahme der Probenflüssigkeit verwendet werden, in die die Aufnahme der Probenflüssigkeit mittels Kapillaraszension erfolgt.

Gegenstand der vorliegenden Erfindung ist demnach ein Verfahren zur photometrischen Analyse einer Probenflüssigkeit in einem automatischen Analysegerät, wobei das Analysegerät mindestens ein Photometer und eine Vorrichtung zum Transport eines einzelnen Analyseröhrchens von einem Vorratsbehälter enthaltend eine Vielzahl von Analyseröhrchen zu dem Photometer umfasst. Das Verfahren umfasst die Schritte:
- Aufnahme eines Volumens einer Probenflüssigkeit in das Analyseröhrchen und
- Messen einer optischen Eigenschaft der Probenflüssigkeit in dem Analyseröhrchen,
wobei die Aufnahme des Volumens der Probenflüssigkeit in das Analyseröhrchen mittels Kapillaraszension erfolgt.

Das Merkmal "Aufnahme eines Volumens einer Probenflüssigkeit in das Analyseröhrchen mittels Kapillaraszension" schließt das maßgebliche Einwirken anderer Kräfte als der Adhäsionskraft, die an der Grenzfläche zwischen aufzunehmender Flüssigkeit und der Innenwand des Analyseröhrchens auftritt, aus. Insbesondere ist das aktive Ausüben von Kräften, wie z.B. von Druck- oder Saugkräften ausgeschlossen.

Dazu muss -wie allgemein bekannt- das Analyseröhrchen einen Hohlkanal mit hinreichend kleinem Durchmesser bzw. Radius aufweisen, wobei die Höhe der gewünschten Flüssigkeitssäule durch die Wahl des Durchmessers des Hohlkanals des Analyseröhrchens eingestellt werden kann. Vorzugsweise besteht das Analyseröhrchen aus Glas oder Kunststoff, und der Hohlkanal hat einen Durchmesser von ca. 0,1 bis 1,5 mm, vorzugsweise von 0,5 bis 1 mm.

Der Hohlkanal des Analyseröhrchens kann unterschiedliche Querschnittsformen aufweisen; er kann beispielsweise eine runde, ovale, dreieckige, rechteckige oder quadratische Querschnittsform haben. Besonders bevorzugt sind Analyseröhrchen mit einer rechteckigen oder quadratischen Querschnittsform des Röhrchens als solchem und mit einem Hohlkanal mit einer ebenfalls rechteckigen oder quadratischen Querschnittsform. Derartige Geometrien mit planparallelen Röhrchenwänden haben den Vorteil, dass Abbildungseffekte durch lichtbrechende, gewölbte Oberflächen weitestgehend vermieden werden.

In einer ersten Ausführungsform ist die Vorrichtung zum Transport eines einzelnen Analyseröhrchens von einem Vorratsbehälter enthaltend eine Vielzahl von Analyseröhrchen zu dem Photometer eine an einem verfahrbaren oder schwenkbaren Transferarm befestigte Vorrichtung zum Greifen eines Analyseröhrchens, und das Verfahren umfasst die Schritte:
a) Verfahren der Vorrichtung zum Greifen eines Analyseröhrchens zu einem Vorratsbehälter enthaltend eine Vielzahl von Analyseröhrchen;
b) Entnahme eines einzelnen Analyseröhrchens mit der Vorrichtung zum Greifen eines Analyseröhrchens aus dem Vorratsbehälter;
c) Verfahren des entnommenen Analyseröhrchens zu einem Probengefäß enthaltend eine Probenflüssigkeit;
d) Eintauchen des Analyseröhrchens in die Probenflüssigkeit zur Aufnahme eines Volumens der Probenflüssigkeit mittels Kapillaraszension;
e) Austauchen des Analyseröhrchens aus der Probenflüssigkeit;
f) Verfahren des befüllten Analyseröhrchens zum Photometer; und
g) Messen einer optischen Eigenschaft der Probenflüssigkeit.

Durch das Eintauchen des Analyseröhrchens in die Probenflüssigkeit steigt Probenflüssigkeit aufgrund der wirkenden Kapillarkraft in dem Analyseröhrchen nach oben. Die beim Austauchen auftretenden Beschleunigungskräfte und die auf die Flüssigkeitssäule wirkende Schwerkraft sind gegenüber der Kapillarkraft vernachlässigbar, so dass die Probenflüssigkeit beim Verfahren des befüllten Analyseröhrchens zum Photometer in dem Analyseröhrchen gehalten wird.

Bei der Vorrichtung zum Greifen eines Analyseröhrchens kann es sich beispielsweise um einen mechanisch, pneumatisch oder magnetisch betriebenen zangenförmigen Greifer handeln. Alternativ kann es sich auch um einen passiven Klemmgreifer handeln, der elastisch verformbar ausgestaltet ist.

In dem Vorratsbehälter für die Analyseröhrchen werden die Analyseröhrchen bevorzugt aufrecht stehend gelagert. Dies ermöglicht ein seitliches Heranfahren der Greifvorrichtung und somit die sichere Entnahme eines einzelnen Analyseröhrchens.

Nach dem Messen einer optischen Eigenschaft der Probenflüssigkeit in dem Photometer kann das befüllte Analyseröhrchen vom Photometer zu einem Sammelbehälter zur Aufnahme von befüllten Analyseröhrchen verfahren und in den Sammelbehälter abgegeben werden. Dies ermöglicht die Verwendung von Einweg-Analyseröhrchen, die nach einmaligem Gebrauch samt der darin enthaltenen Probenflüssigkeit entsorgt werden, wodurch das Risiko für Kontamination und Verschleppung vermindert wird.

In einer zweiten Ausführungsform des erfindungsgemäßen Verfahrens umfasst das Analysegerät ferner eine an einem verfahrbaren oder schwenkbaren Transferarm befestigte Pipettiervorrichtung zum Transfer eines Volumens einer Probenflüssigkeit, und das Verfahren umfasst die Schritte:
i) Ansaugen eines Volumens einer Probenflüssigkeit aus einem Probengefäß enthaltend eine Probenflüssigkeit mittels der Pipettiervorrichtung;
ii) Verfahren der Pipettiervorrichtung in eine Position, in der die Abgabe des angesaugten Volumens der Probenflüssigkeit in ein Analyseröhrchen erfolgt;
iii) Aufnahme des Volumens der Probenflüssigkeit in das Analyseröhrchen mittels Kapillaraszension;
iv) Verfahren des befüllten Analyseröhrchens zum Photometer; und
v) Messen einer optischen Eigenschaft der Probenflüssigkeit.

Durch die Abgabe des angesaugten Volumens der Probenflüssigkeit in das Analyseröhrchen sinkt Probenflüssigkeit aufgrund der wirkenden Kapillarkraft in dem Analyseröhrchen nach unten. Dazu sollten Analyseröhrchen verwendet werden, die aus Glas oder Kunststoff bestehen und entlang ihrer Längsachse einen ersten trichterförmigen Abschnitt und einen zweiten rohrförmigen Abschnitt aufweisen, wobei in diesem Fall der Hohlkanal im rohrförmigen Abschnitt einen Durchmesser von ca. 0,1 bis 1,5 mm, vorzugsweise von 0,5 bis 1 mm hat. Der trichterförmige Abschnitt gewährleistet auch im Falle einer unpräzisen Positionierung der Pipettiervorrichtung eine sichere Aufnahme der Probenflüssigkeit.

Vorzugsweise umfasst das Analysegerät für die zweite Ausführungsform des erfindungsgemäßen Verfahrens zusätzlich eine Transportvorrichtung für die Analyseröhrchen. Bei der Transportvorrichtung kann es sich um eine linear oder auf einer Kreisbahn bewegliche Vorrichtung handeln, die mehrere Aufnahmepositionen für die Aufnahme von jeweils einem Analyseröhrchen aufweist. Damit werden leere Analyseröhrchen zunächst in eine Position transportiert, die im Arbeitsbereich der Pipettiervorrichtung liegt. Nach Aufnahme der Probenflüssigkeit werden die befüllten Analyseröhrchen mittels der Transportvorrichtung zum Photometer verfahren, das entlang des Transportweges angeordnet ist.

Nach dem Messen einer optischen Eigenschaft der Probenflüssigkeit in dem Photometer kann das befüllte Analyseröhrchen mittels der Transportvorrichtung vom Photometer zu einem Sammelbehälter zur Aufnahme von befüllten Analyseröhrchen verfahren und in den Sammelbehälter abgegeben werden. Dies ermöglicht die Verwendung von Einweg-Analyseröhrchen, die nach einmaligem Gebrauch samt der darin enthaltenen Probenflüssigkeit entsorgt werden.

Unter dem Begriff "Probenflüssigkeit" ist hinsichtlich der vorliegenden Erfindung einerseits eine unverdünnte humane oder tierische Körperflüssigkeitsprobe zu verstehen, wie beispielsweise Blut, Plasma, Serum, Urin, oder Liquor (sog. Primärproben). Andererseits kann es sich bei einer Probenflüssigkeit auch um ein Gemisch einer humanen oder tierischen Körperflüssigkeitsprobe mit einem Nachweisreagenz handeln, also einen Testansatz.

Als optische Eigenschaft der Probenflüssigkeit wird vorzugsweise die Extinktion der Probenflüssigkeit mit Licht mindestens einer Wellenlänge gemessen. Anhand der Extinktion einer Probenflüssigkeit lässt sich die Konzentration einer Substanz in der Lösung ermitteln. Dazu ist es erforderlich, dass zuvor die Extinktion mindestens einer Standardlösung bekannter Konzentration bestimmt wurde. Da sich die Extinktion proportional zur Konzentration verhält, kann mittels Kalibration durch Extinktionsmessungen mehrerer Standardlösungen bekannter Konzentrationen die Konzentration einer gelösten Substanz ermittelt werden.

Vorzugsweise wird die Extinktion der Probenflüssigkeit mit Licht einer Mehrzahl von unterschiedlichen Wellenlängen gemessen. Für die präanalytische optische Analyse einer Primärprobe aus der Gruppe Blutplasma und Blutserum zur Identifizierung hämolytischer, ikterischer und lipämischer Primärproben kann beispielsweise Licht einer ersten Wellenlänge zwischen 600 nm und 660 nm, vorzugsweise von 645 nm verwendet werden, bei der die nicht durch Lipide verursachte Extinktion vernachlässigbar ist, und Licht einer zweiten Wellenlänge zwischen 440 nm und 480 nm, vorzugsweise von 470 nm verwendet werden, bei der Bilirubin ein Extinktionsmaximum aufweist, und Licht einer dritten Wellenlänge zwischen 400 nm und 440 nm, vorzugsweise von sie 415 nm, bei der Hämoglobin ein Extinktionsmaximum aufweist.

Ein weiterer Gegenstand der vorliegenden Erfindung ist ein automatisches Analysegerät mit einer an einem verfahrbaren oder schwenkbaren Transferarm befestigten Vorrichtung zum Greifen eines Analyseröhrchens, mit einem Vorratsbehälter zur Aufnahme einer Vielzahl von Analyseröhrchen, mit einer Mehrzahl von Aufnahmepositionen für Probengefäße, mit mindestens einem Photometer und mit einer Steuerung, die so konfiguriert ist, dass sie ein Verfahren zur photometrischen Analyse einer Probenflüssigkeit mit den folgenden Schritten steuert:
a) Verfahren der Vorrichtung zum Greifen eines Analyseröhrchens zu einem Vorratsbehälter enthaltend eine Vielzahl von Analyseröhrchen;
b) Entnahme eines einzelnen Analyseröhrchens mit der Vorrichtung zum Greifen eines Analyseröhrchens aus dem Vorratsbehälter;
c) Verfahren des entnommenen Analyseröhrchens zu einem Probengefäß enthaltend eine Probenflüssigkeit;
d) Eintauchen des Analyseröhrchens in die Probenflüssigkeit zur Aufnahme eines Volumens der Probenflüssigkeit mittels Kapillaraszension;
e) Austauchen des Analyseröhrchens aus der Probenflüssigkeit;
f) Verfahren des befüllten Analyseröhrchens zum Photometer; und
g) Messen einer optischen Eigenschaft der Probenflüssigkeit.

Vorzugsweise ist das Photometer so ausgelegt, dass es Licht einer Mehrzahl von unterschiedlichen Wellenlängen erzeugen kann. Dazu kann das Photometer entweder mehrere Lichtquellen, z.B. Leuchtdioden, umfassen oder eine Lichtquelle, vor der unterschiedliche Farbfilter positioniert werden können.

Die Erfindung wird im Folgenden anhand einer Zeichnung erläutert.

Darin zeigen
- FIG. 1: die erste Ausführungsform des erfindungsgemäßen Verfahrens, bei dem das Analyseröhrchen in die Probenflüssigkeit eingetaucht wird;
- FIG. 2: die zweite Ausführungsform des erfindungsgemäßen Verfahrens, bei dem die Probenflüssigkeit von oben in das Analyseröhrchen pipettiert wird;
- FIG. 3: ein erfindungsgemäßes automatisches Analysegerät.

Gleiche Teile sind in allen Figuren mit denselben Bezugszeichen versehen.

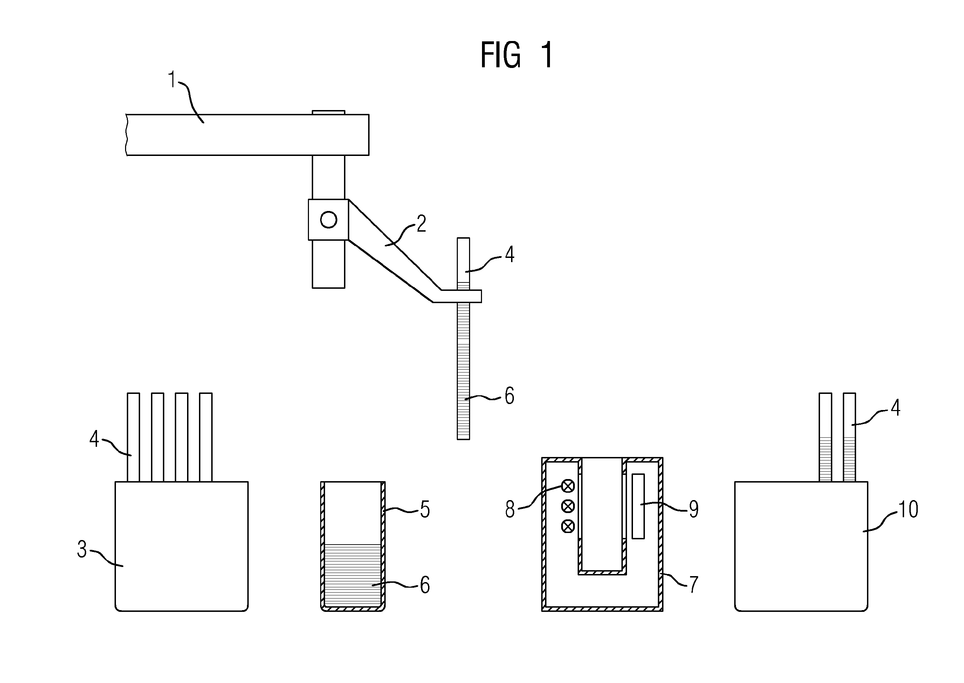

FIG. 1 ist eine schematische Darstellung einer ersten Ausführungsform des erfindungsgemäßen Verfahrens zur photometrischen Analyse einer Probenflüssigkeit in einem nicht näher dargestellten automatischen Analysegerät. Ein an einem beweglichen Transferarm 1 befestigter Greifer 2 wird zunächst zu einem Vorratsbehälter 3 bewegt, der eine Vielzahl von leeren Analyseröhrchen 4 enthält. Die kreiszylinderförmigen Analyseröhrchen 4 aus Glas sind ca. 50 mm lang, haben einen Hohlkanal mit einem Durchmesser von 1 mm und sind an beiden Enden offen. Mit Hilfe des Greifers 2 wird ein einzelnes Analyseröhrchen 4 aus dem Vorratsbehälter 3 entnommen. Der Transferarm 1 wird horizontal verfahren, so dass das leere Analyseröhrchen 4 über der Öffnung eines Probengefäßes 5, das humanes Plasma als Probenflüssigkeit 6 enthält, positioniert ist. Der Transferarm 1 wird abgesenkt, so dass das untere Ende des Analyseröhrchens 4 in die Probenflüssigkeit 6 eintaucht. Infolge der Kapillarkraft steigt die Probenflüssigkeit 6 in dem Analyseröhrchen 4 auf. Der Transferarm 1 wird nach oben bewegt, und das befüllte Analyseröhrchen wird aus der Probenflüssigkeit 6 ausgetaucht. Der Transferarm 1 wird horizontal verfahren, so dass das befüllte Analyseröhrchen 4 über der Öffnung eines Photometers 7 positioniert ist. Der Transferarm 1 wird abgesenkt, so dass etwa die untere Hälfte des Analyseröhrchens 4 in die Messposition des Photometers 7 abgesenkt wird. Das Photometer 7 umfasst mindestens drei Leuchtdioden 8, die das Analyseröhrchen nacheinander mit Licht der Wellenlängen 645, 470 und 415 nm durchstrahlen, und einen Photodetektor 9. Nach Messung der Extinktion der Probenflüssigkeit 6 wird der Transferarm 1 nach oben bewegt, um das Analyseröhrchen 4 aus dem Photometer 7 zu entnehmen. Der Transferarm 1 wird horizontal verfahren, so dass das befüllte Analyseröhrchen 4 schließlich über der Öffnung eines Sammelbehälters 10 vom Greifer 2 abgegeben werden kann.

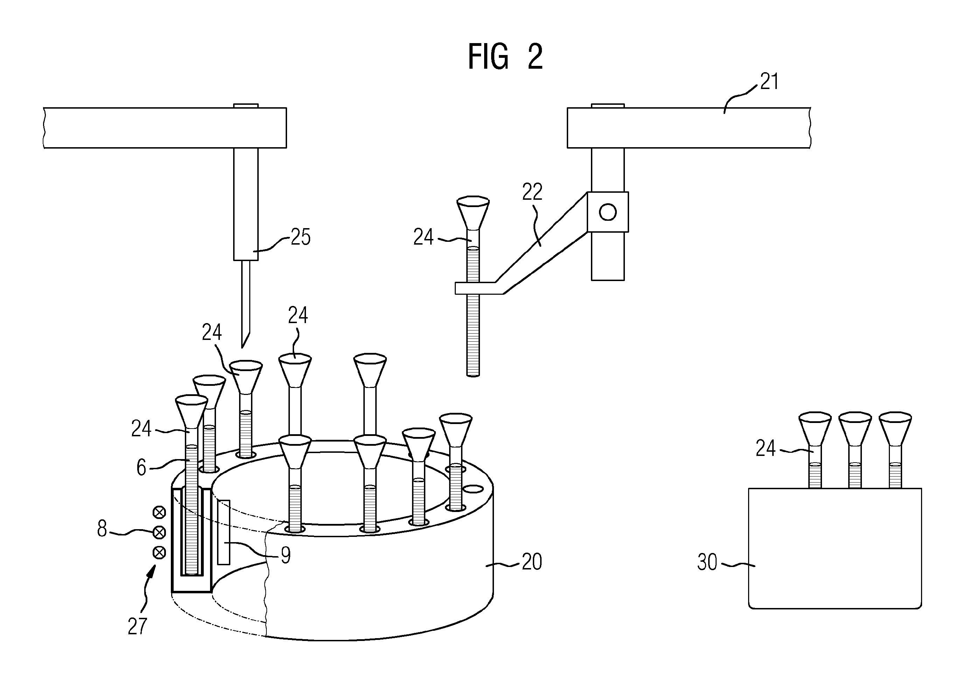

FIG. 2 ist eine schematische Darstellung einer zweiten Ausführungsform des erfindungsgemäßen Verfahrens zur photometrischen Analyse einer Probenflüssigkeit in einem nicht näher dargestellten automatischen Analysegerät. In einer kreisringförmigen Transportvorrichtung 20 befinden sich in entsprechenden Aufnahmepositionen eine Vielzahl von zunächst leeren Analyseröhrchen 24. Die Analyseröhrchen 24 bestehen aus Glas und weisen entlang ihrer Längsachse einen trichterförmigen Abschnitt und einen rohrförmigen Abschnitt auf. Der rohrförmige Abschnitt ist etwa 50 mm lang; der Hohlkanal des Analyseröhrchens hat einen Durchmesser von 1 mm und ist an beiden Enden offen. Durch Drehung der Transportvorrichtung 20 wird ein leeres Analyseröhrchen 24 in eine Position bewegt, in der eine Pipettiernadel einer Pipettiervorrichtung 25, die zuvor ein Volumen einer Probenflüssigkeit 6 aus einem Probengefäß aufgesaugt hat, oberhalb des trichterförmigen Abschnitts des Analyseröhrchens 24 positioniert ist. Es werden ca. 20 µL Probenflüssigkeit 6 von der Pipettiernadel in den trichterförmigen Abschnitt des Analyseröhrchens 24 abgegeben, und infolge der Kapillarkraft sinkt die Probenflüssigkeit 6 in dem rohrförmigen Abschnitt des Analyseröhrchens 24 nach unten. Durch Weiterdrehen der Transportvorrichtung 20 wird das befüllte Analyseröhrchen 24 in einem stationären Photometer 27 positioniert, und ein leeres Analyseröhrchen 24 wird in der Pipettierposition positioniert. Auch dieses Photometer 27 umfasst drei Leuchtdioden 8, die das Analyseröhrchen nacheinander mit Licht der Wellenlängen 645, 470 und 415 nm durchstrahlen, und einen Photodetektor 9. Nach Messung der Extinktion der Probenflüssigkeit 6 wird, das befüllte Analyseröhrchen 24 durch Weiterdrehen der Transportvorrichtung 20 in eine Position gebracht, in der ein an einem Transportarm 21 befestigter Greifer 22 das befüllte Analyseröhrchen 24 aus der Transportvorrichtung entnimmt und in einen Sammelbehälter 30 abgibt. Der Greifer 22 hat ferner Zugriff auf einen nicht dargestellten Vorratsbehälter, aus dem leere Analyseröhrchen 24 entnommen und in die Transportvorrichtung 20 transferiert werden können.

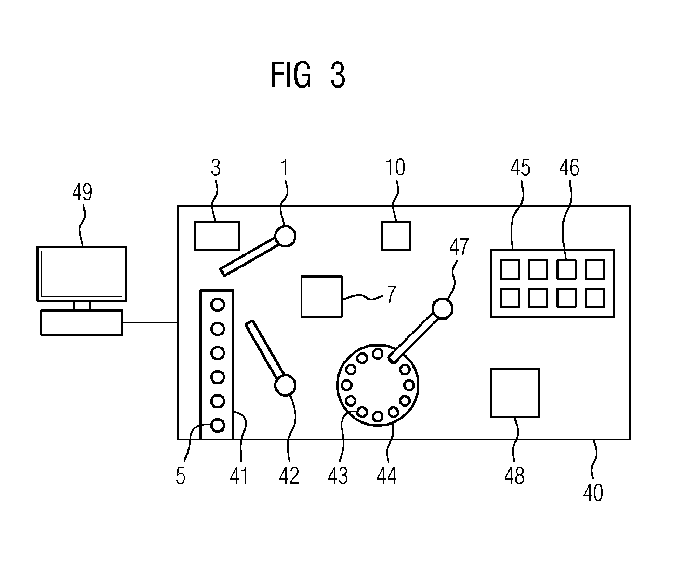

FIG. 3 ist eine schematische Darstellung eines automatischen Analysegeräts 40 mit einigen darin enthaltenen Bauteilen. Hierbei werden nur die wichtigsten Bauteile stark vereinfacht dargestellt, um die grundsätzliche Funktion des automatischen Analysegeräts 40 zu erläutern, ohne hierbei detailliert die einzelnen Teile jedes Bauteils darzustellen.

Das automatische Analysegerät 40 ist dafür ausgebildet, vollautomatisch verschiedenste Analysen von Blutplasma oder anderen Körperflüssigkeiten durchzuführen, ohne dass hierfür Aktivitäten eines Benutzers notwendig wären. Notwendige Eingriffe eines Benutzers beschränken sich vielmehr auf Wartung oder Reparatur und Nachfüllarbeiten, wenn z.B. Küvetten nachgefüllt oder Flüssigkeitsbehälter ausgetauscht werden müssen.

Die Probengefäße 5 mit Patientenproben werden dem automatischen Analysegerät 40 auf nicht näher dargestellten Schlitten über eine Zuführungsschiene 41 zugeführt. Informationen hinsichtlich der pro Probe durchzuführenden Analysen können beispielsweise mittels auf den Probengefäßen 5 angebrachten Strichcodes übergeben werden, die in dem automatischen Analysegerät 40 ausgelesen werden. Aus den Probengefäßen 5 werden mit Hilfe einer ersten Pipettiervorrichtung 42 Probenaliquots mittels einer Pipettiernadel entnommen.

Die Probenaliquots werden ebenfalls nicht näher dargestellten Küvetten zugeführt, die in Aufnahmepositionen 43 einer drehbaren, auf 37 °C temperierten Inkubationseinrichtung 44 angeordnet sind. In dem auf ca. 8-10 °C gekühlten Reagenzgefäßvorratsbehälter 45 werden Reagenzgefäße 46 mit verschiedenen Reagenzflüssigkeiten aufbewahrt. Reagenzflüssigkeit wird mittels der Pipettiernadel einer zweiten Pipettiervorrichtung 47 aus einem Reagenzgefäß 46 entnommen und zur Bereitstellung eines Testansatzes in eine Küvette, die bereits ein Probenaliquot enthält, abgegeben. Die Küvette mit dem Testansatz wird von einem nicht dargestellten Transferarm mit einem Greifer von der Inkubationseinrichtung 44 in eine photometrische Messeinheit 48 transportiert, wo die Extinktion des Testansatzes gemessen wird. Die Extinktionsmessung des Testansatzes dient der quantitativen Bestimmung eines Analyten, beispielsweise der Aktivitätsbestimmung eines Blutgerinnungsfaktors.

Für die präanalytische Analyse der unverdünnten Probenflüssigkeiten ist ein zweites Photometer 7 vorgesehen. Mit einem Greifer, der an dem Transferarm 1 befestigt ist, wird zunächst aus einem Vorratsbehälter 3 ein leeres Analyseröhrchen entnommen. Der Transferarm 1 wird horizontal geschwenkt, so dass das leere Analyseröhrchen über der Öffnung eines Probengefäßes 5, das humanes Plasma als Probenflüssigkeit enthält, positioniert ist. Durch Absenken des Transferarms 1 wird das untere Ende des Analyseröhrchens in die Probenflüssigkeit eintaucht. Infolge der Kapillarkraft steigt die Probenflüssigkeit in dem Analyseröhrchen auf. Der Transferarm 1 wird nach oben bewegt, und das befüllte Analyseröhrchen wird zu dem Photometer 7 verfahren. Nach Messung der Extinktion wird das Analyseröhrchen von dem Transferarm 1 zu einem Sammelbehälter 10 verfahren und dort vom Greifer abgegeben.

Der gesamte Prozess wird von einer Steuereinheit 49, wie z.B. von einem über eine Datenleitung angeschlossenen Rechner, gesteuert, unterstützt durch eine Vielzahl weiterer, nicht näher dargestellter elektronischer Schaltungen und Mikroprozessoren innerhalb des automatischen Analysegeräts 40 und seiner Bauteile.

### BEZUGSZEICHENLISTE

- 1: Transferarm
- 2: Greifer
- 3: Vorratsbehälter
- 4: Analyseröhrchen
- 5: Probengefäß
- 6: Probenflüssigkeit
- 7: Photometer
- 8: Leuchtdiode
- 9: Photodetektor
- 10: Sammelbehälter

- 20: Transportvorrichtung
- 21: Transportarm
- 22: Greifer
- 24: Analyseröhrchen
- 25: Pipettiervorrichtung
- 27: Photometer
- 30: Sammelbehälter

- 40: Analysegerät
- 41: Zuführungsschiene
- 42: Pipettiervorrichtung
- 43: Aufnahmeposition
- 44: Inkubationseinrichtung
- 45: Reagenzgefäßvorratsbehälter
- 46: Reagenzgefäß
- 47: Pipettiervorrichtung
- 48: Messeinheit
- 49: Steuereinheit

## Patentansprüche

1. Verfahren zur photometrischen Analyse einer Probenflüssigkeit (6) in einem automatischen Analysegerät (40), das Analysegerät (40) umfassend mindestens ein Photometer (7, 27) und eine Vorrichtung zum Transport eines einzelnen Analyseröhrchens (4, 24) von einem Vorratsbehälter (3) enthaltend eine Vielzahl von Analyseröhrchen (4, 24) zu dem Photometer (7, 27), das Verfahren umfassend die Schritte:
• Aufnahme eines Volumens einer Probenflüssigkeit (6) in das Analyseröhrchen (4, 24) und
• Messen einer optischen Eigenschaft der Probenflüssigkeit (6) in dem Analyseröhrchen (4, 24),
**dadurch gekennzeichnet, dass**
die Aufnahme des Volumens der Probenflüssigkeit (6) in das Analyseröhrchen (4, 24) mittels Kapillaraszension erfolgt.

2. Verfahren gemäß Anspruch 1, wobei die Vorrichtung zum Transport eines einzelnen Analyseröhrchens (4) von einem Vorratsbehälter (3) enthaltend eine Vielzahl von Analyseröhrchen (4) zu dem Photometer (7) eine an einem verfahrbaren oder schwenkbaren Transferarm (1) befestigte Vorrichtung zum Greifen (2) eines Analyseröhrchens (4) ist, das Verfahren umfassend die Schritte:
a) Verfahren der Vorrichtung zum Greifen (2) eines Analyseröhrchens (4) zu einem Vorratsbehälter (3) enthaltend eine Vielzahl von Analyseröhrchen (4);
b) Entnahme eines einzelnen Analyseröhrchens (4) mit der Vorrichtung zum Greifen (2) eines Analyseröhrchens (4) aus dem Vorratsbehälter (3);
c) Verfahren des entnommenen Analyseröhrchens (4) zu einem Probengefäß (5) enthaltend eine Probenflüssigkeit (6);
d) Eintauchen des Analyseröhrchens (4) in die Probenflüssigkeit (6) zur Aufnahme eines Volumens der Probenflüssigkeit (6) mittels Kapillaraszension;
e) Austauchen des Analyseröhrchens (4) aus der Probenflüssigkeit (6);
f) Verfahren des befüllten Analyseröhrchens (4) zum Photometer (7); und
g) Messen einer optischen Eigenschaft der Probenflüssigkeit (6).

3. Verfahren gemäß Anspruch 2, ferner umfassend die Schritte:
h) Verfahren des befüllten Analyseröhrchens (4) vom Photometer (7) zu einem Sammelbehälter (10) zur Aufnahme von befüllten Analyseröhrchen (4); und
i) Abgabe des befüllten Analyseröhrchens (4) in den Sammelbehälter (10).

4. Verfahren gemäß einem der Ansprüche 1 bis 3, wobei das Analyseröhrchen (4) aus Glas oder Kunststoff besteht und einen Hohlkanal mit einem Durchmesser von 0,1 bis 1,5 mm, vorzugsweise von 0,5 bis 1 mm hat.

5. Verfahren zur photometrischen Analyse einer Probenflüssigkeit (6) in einem automatischen Analysegerät gemäß Anspruch 1, wobei das Analysegerät ferner eine an einem verfahrbaren Transferarm befestigte Pipettiervorrichtung (25) zum Transfer eines Volumens einer Probenflüssigkeit (6) umfasst, das Verfahren umfassend die Schritte:
i) Ansaugen eines Volumens einer Probenflüssigkeit (6) aus einem Probengefäß enthaltend eine Probenflüssigkeit mittels der Pipettiervorrichtung (25) ;
ii) Verfahren der Pipettiervorrichtung (25) in eine Position, in der die Abgabe des angesaugten Volumens der Probenflüssigkeit (6) in ein Analyseröhrchen (24) erfolgt;
iii) Aufnahme des Volumens der Probenflüssigkeit (6) in das Analyseröhrchen (24) mittels Kapillaraszension;
iv) Verfahren des befüllten Analyseröhrchens (24) zum Photometer (27); und
v) Messen einer optischen Eigenschaft der Probenflüssigkeit (6).

6. Verfahren gemäß Anspruch 5, ferner umfassend die Schritte:
vi) Verfahren des befüllten Analyseröhrchens (24) vom Photometer (27) zu einem Sammelbehälter (30) zur Aufnahme von befüllten Analyseröhrchen (24); und
vii) Abgabe des befüllten Analyseröhrchens (24) in den Sammelbehälter (30).

7. Verfahren gemäß einem der Ansprüche 5 und 6, wobei das Analyseröhrchen (24) aus Glas oder Kunststoff besteht und entlang seiner Längsachse einen ersten trichterförmigen Abschnitt und einen zweiten rohrförmigen Abschnitt aufweist, wobei der rohrförmige Abschnitt einen Hohlkanal mit einem Durchmesser von 0,1 bis 1,5 mm, vorzugsweise von 0,5 bis 1 mm hat.

8. Verfahren gemäß einem der Ansprüche 1 bis 7, wobei die Probenflüssigkeit (6) aus einer humanen oder tierischen Körperflüssigkeit besteht, vorzugsweise aus Blut, Plasma, Serum, Urin oder Liquor.

9. Verfahren gemäß einem der Ansprüche 1 bis 7, wobei die Probenflüssigkeit (6) aus einem Gemisch einer humanen oder tierischen Körperflüssigkeit mit einem Nachweisreagenz besteht.

10. Verfahren gemäß einem der Ansprüche 1 bis 9, wobei als optische Eigenschaft die Extinktion der Probenflüssigkeit (6) gemessen wird, vorzugsweise mit Licht einer Mehrzahl von unterschiedlichen Wellenlängen.

11. Automatisches Analysegerät (40) mit einer an einem verfahrbaren oder schwenkbaren Transferarm (1) befestigten Vorrichtung zum Greifen (2) eines Analyseröhrchens (4), mit einem Vorratsbehälter (3) zur Aufnahme einer Vielzahl von Analyseröhrchen (4), mit einer Mehrzahl von Aufnahmepositionen (43) für Probengefäße, mit mindestens einem Photometer (7) und mit einer Steuerung, die so konfiguriert ist, dass sie ein Verfahren zur photometrischen Analyse einer Probenflüssigkeit (6) mit den folgenden Schritten steuert:
a) Verfahren der Vorrichtung zum Greifen (2) eines Analyseröhrchens (4) zu einem Vorratsbehälter (3) enthaltend eine Vielzahl von Analyseröhrchen (4);
b) Entnahme eines einzelnen Analyseröhrchens (4) mit der Vorrichtung zum Greifen (2) eines Analyseröhrchens (4) aus dem Vorratsbehälter (3);
c) Verfahren des entnommenen Analyseröhrchens (4) zu einem Probengefäß (5) enthaltend eine Probenflüssigkeit (6);
d) Eintauchen des Analyseröhrchens (4) in die Probenflüssigkeit (6) zur Aufnahme eines Volumens der Probenflüssigkeit (6) mittels Kapillaraszension;
e) Austauchen des Analyseröhrchens (4) aus der Probenflüssigkeit (6);
f) Verfahren des befüllten Analyseröhrchens (4) zum Photometer (7); und
g) Messen einer optischen Eigenschaft der Probenflüssigkeit (6).

12. Automatisches Analysegerät (40) gemäß Anspruch 11, bei dem das Photometer (7) so ausgelegt ist, dass es Licht einer Mehrzahl von unterschiedlichen Wellenlängen erzeugen kann.
